# EUROPÄISCHE PATENTANMELDUNG

(11) **EP 2 055 179 A1**
(43) Veröffentlichungstag der Anmeldung: **06.05.2009**
(21) Anmeldenummer: 08165423.8
(22) Anmeldetag: 29.09.2008
(51) Int. Cl.: A01F 25/13, A01F 25/14

(54) **Silierfolie**

(30) Priorität: 05.11.2007 DE 102007053106
(71) Anmelder: Orbita-Film GmbH, 06369 Weissandt-Gölzau (DE)
(72) Erfinder: Schröter, Irene, Dr., 06369 Dohndorf (DE); Fiedler, Steffen, 06114 Halle/Saale (DE); Baumann, Hans Joachim, Dr., 06366 Köthen (DE)
(74) Vertreter: Wablat, Wolfgang

(57) **Zusammenfassung**

Eine Silierfolie zum Umhüllen bzw. Abdecken von als Ballen oder in Fahrsilos verdichteter landwirtschaftlicher Produkte weist in das Kunststoffmaterial eingebettete Metallpartikel auf, die das für die Wärmeeintragung in das Siliergut verantwortliche Sonnenlicht mindestens 20% im IR-Wellenlängenbereich zwischen 2200 und 15000nm reflektieren und außerdem für eine Abführung der in die Silage eingebrachten oder in dieser aufgrund biologischer Prozesse erzeugten Wärme sorgen. Die Qualität der Silage wird durch diesen Wärme regulierenden Prozess wesentlich verbessert.

## Beschreibung

Die Erfindung betrifft eine Silierfolie zum Abdecken von in Fahrsilos oder in Form von Ballen verdichteten landwirtschaftlichen Produkten für die Silierung.

Das Silieren von Grünfuttermitteln wie beispielsweise Gras, Mais, Klee, Luzerne, Ackerbohnen, Hafer oder Rübenblätter ist ein bekanntes, auf der Milchsäuregärung basierendes Konservierungsverfahren. Eine nach diesem Verfahren hergestellte Silage aus nachwachsenden Rohstoffen kann auch als Energieträger für Biogasanlagen verwendet werden. Eine wesentliche Voraussetzung für den erfolgreichen Silierprozess von landwirtschaftlichen Produkten ist der luftdichte Abschluss des zu silierenden Pflanzenmaterials, das zu diesem Zweck stark verdichtet wird und in einem Fahr- oder Flachsilo mit einer Kunststofffolie abgedeckt ist oder in Ballen- oder Schlauchform mit einer Kunststofffolie ummantelt ist.

Aufgrund eingeschlossener Luft oder ungenügender Abdichtung kommt es zur Schimmelpilzbildung und dadurch nicht nur zur Vernichtung von Nährstoffen, sondern auch zur Erwärmung des Siliergutes. Darüber hinaus wird das Siliergut vor allem auch durch Sonnenstrahlen erwärmt. Infolge übermäßiger Erwärmung der Silage werden Hefen und Pilze aktiviert und somit Restzucker und Milchsäure im Siliergut abgebaut, so dass in Verbindung mit dem dadurch erhöhten pH-Wert wieder günstige Voraussetzungen für das Wachstum von Schimmelpilzen vorhanden sind.

Die Erwärmung durch Schimmelpilzbildung oder äußere Einflüsse hat bekanntermaßen in dem erwärmten Bereich bis zu einer Tiefe von 10 bis 15cm eine verminderte Qualität der Silage zur Folge, die bis zu 20% des gesamten Siliergutes betreffen kann.

Es ist Stand der Technik, zur Abdeckung des Siliermaterials weiß eingefärbte Kunststofffolien einzusetzen, die die Wärmeeinwirkung von außen - wenn auch in begrenztem Umfang - vermindern können, aber insofern nachteilig sind, dass deren Alterungsbeständigkeit nur durch Hinzufügen sehr großer Mengen von teuren UV-Stabilisatoren gesichert werden kann. Eine ebenfalls bekannte mehrschichtige Silagefolie, bestehend aus einer schwarzen Innen- oder Mittelschicht und einer weißen Außenschicht, verfügt aufgrund der schwarz eingefärbten Schicht zwar über bessere Alterungsstabilität, jedoch ist dann der Wärmeeintrag in das Siliergut größer. Die im Siliergut - durch Sonneneinstrahlung oder Schimmelpilzbildung - vorhandene Wärme kann nicht nach außen abgeführt werden, so dass die Qualität des Siliergutes - zumindest im oberflächennahen Bereich - weiterhin unzureichend ist.

Die Abdeckung von Gärfutterbehältern durch Plastikfolien ist z.B. aus der DD 065 143 A1 bekannt. Als Beispiele für Gärfutterbehälter werden insbesondere Fahrsilos genannt.

Aus der EP 1 666 927 A1 ist bekannt, dass transparente Kunststofffolien Metallbeschichtungen aufweisen können, die eine starke Wärmeeinstrahlung vermindern.

Die DE 70 25 989 U offenbart eine pigmenthaltige Kunststofffolie zur Verpackung von lichtempfindlichen Gütern, wie z.B. Milch oder Ähnlichem. Die Pigmente können für den Lichtschutz metallische Bestandteile enthalten. Eine weiße Zusatzschicht verhindert u.a. eine Erwärmung der Milch durch Sonneneinstrahlung.

Die DE 101 16 687 A1 offenbart eine Kunststofffolie für den Blumen-Obst-Gemüseanbau, die durchsichtig ist und mit UV-Stabilisatoren versehen ist, die Licht in einem bestimmten Wellenbereich absorbieren.

Der Erfindung liegt die Aufgabe zugrunde, eine Kunststofffolie zum luftdichten Abdecken bzw. Umhüllen von Siliergut anzugeben, die die durch Wärmeeinfluss bedingte Qualitätsminderung der Silage verringert.

Erfindungsgemäß wird die Aufgabe mit einer gemäß den Merkmalen des Patentanspruchs 1 ausgebildeten Silierfolie gelöst. Vorteilhafte Weiterbildungen der Erfindung sind Gegenstand der Unteransprüche.

Der Grundgedanke der Erfindung besteht in der gleichmäßig verteilten Einbindung kleiner, einerseits über ein hohes Lichtreflexionsvermögen und andererseits über ein hohes Wärmeleitvermögen verfügender Metallpartikel, die das Sonnenlicht in einem eine hohe Wärmewirkung aufweisenden Spektralbereich, das heißt in einem zwischen 2200 und 15000nm liegenden IR-Wellenlängenbereich reflektieren und andererseits die in das Siliergut eingebrachte oder in diesem erzeugte überschüssige Wärme nach außen abführen. Insbesondere in dem üblicherweise durch zu hohe Wärmeeinwirkung besonders beeinflussten Rand- bzw. Mantelbereich eines Fahrsilos oder Ballens wird die Silagequalität deutlich verbessert. Darüber hinaus bewirken die Metallteilchen eine Abschirmung des Kunststoffmaterials der Silierfolie gegenüber UV-Strahlung, so dass das Folienmaterial für eine vorgegebene Nutzungsdauer weniger gegen UV-Strahlung stabilisiert werden muss.

In weiterer Ausbildung der Erfindung bestehen die Metallpartikel aus Aluminium, Magnesium, Zink oder ähnlichen Metallen oder entsprechenden Metalllegierungen und sind in einem Anteil von 0,1 bis 2,0% (vzw. 0,3 bis 0,6%) und in einer mittleren Teilchengröße von ca. 1 bis 50µm in das aus Polyethylen bestehende Folienmaterial eingebunden.

Die Dicke der Silierfolie, die in Abhängigkeit von der jeweiligen Folienstärke ein-, zwei- oder mehrschichtig ausgeführt ist, kann zwischen 10 und 500µm betragen. Eine zwei- oder mehrschichtige Folie wird durch Koextrusion oder durch Verkleben oder einfaches Aufeinanderlegen von Einzelfolien hergestellt.

Die bei einer Zwei- oder Mehrschichtfolie als Trägerschichten bezeichneten anderen - innen liegenden - Schichten sind schwarz oder weiß eingefärbt. Zumindest die am weitesten innen liegende - erste - Trägerschicht ist vorzugsweise schwarz gefärbt, während eine oder mehrere gegebenenfalls vorhandene mittig angeordnete zusätzliche Trägerschicht(en) auch weiß eingefärbt sein kann (können). Jedoch ist insbesondere zu gewünschten farblichen Gestaltungsvarianten eine weiße innen liegende erste Trägerschicht, ohne zusätzliche mittlere Trägerschicht oder in Verbindung mit einer oder mehreren zusätzlichen weißen oder schwarzen Trägerschicht(en) möglich.

Zur gewünschten farblichen Gestaltung ist zur Einstellung von anderen Farbtönen als schwarz, weiß und der silbrigen Eigenfarbe der Metallpartikel bzw. für Farbnuancen die Zugabe von Farbstoffen möglich, wobei in der oder den Trägerschicht(en) sowohl transparente als auch deckende Farben, in der reflektierenden Funktionsschicht jedoch vorzugsweise transparente Farben zum Einsatz kommen.

Die Erfindung wird anhand eines Ausführungsbeispiels näher erläutert.

Gemäß einer beispielhaften Ausführungsform der erfindungsgemäßen Silierfolie umfasst eine dreischichtige, durch Koextrusion hergestellte Silierfolie aus Polyethylen eine innere, schwarz eingefärbte erste Trägerschicht, eine mittlere, weiß eingefärbte zweite Trägerschicht und eine äußere Funktionsschicht mit in den Kunststoff eingebetteten Metallpartikeln. In der insgesamt 150µm dicken Silierfolie beträgt die Stärke der Funktionsschicht 45µm, das heißt, 30% der Gesamtfoliendicke. In der Funktionsschicht befinden sich 0,5% Aluminiumpartikel mit einer mittleren Teilchengröße von ca. 15µm, die als kunststoffummanteltes Granulat in den Extrusionsprozess zur Herstellung der Silierfolie eingebracht werden.

Die in der außen liegenden Funktionsschicht vorhandenen Aluminiumpartikel bewirken zum einen eine starke Reflexion der auf die Außenseite der Silierfolie auftreffenden IR-Strahlung. Im konkreten Fall des Ausführungsbeispieles betrug die Reflexion im Spektralbereich von 2200 bis 15000nm 32,3%. Eine mit gleichen Rohstoffen hergestellte Vergleichsfolie, bei der anstelle der mit Metallpartikeln ausgerüsteten Funktionsschicht die äußere Schicht entsprechend dem Stand der Technik weiß eingefärbt wurde, ergab mit gleicher Messmethode lediglich Werte für die Reflexion von 9,5%.

Die Funktionsschicht ist durch die Beschaffenheit und Menge der metallischen Partikel so ausgebildet, dass der für die Erwärmung der Silage verantwortliche Spektrenabschnitt des Sonnenlichtes, das heißt ein weiter IR-Wellenlängenbereich von 2250nm bis 15000nm, reflektiert wird, um das Eintragen von Wärme in die Silage infolge Sonnenstrahlung deutlich zu verringern. Eine wichtige Funktion der im vorliegenden Ausführungsbeispiel aus Aluminium bestehenden Metallpartikel in der Funktionsschicht besteht zum anderen in dem erhöhten Wärmeleitwert der Silierfolie, so dass sowohl in die Silage von außen eingebrachte Wärme als auch im Innern der Silage durch biologische Prozesse gebildete Wärme über die Silierfolie nach außen abgeführt wird. Aufgrund der verringerten Temperatur des Siliergutes infolge Sonnenlichtreflexion und Abführung überschüssiger Wärme ist ein optimaler Ablauf der biologischen Prozesse während des Silierens und eine hohe Qualität der Silage gewährleistet.

Die Erfindung ist nicht auf das vorliegende Ausführungsbeispiel beschränkt. Im Rahmen der Patentansprüche sind bezüglich der Art und Ausbildung der Metallpartikel, der Dicke der Silierfolie oder der Dicke der Träger- und Funktionsschichten oder der Einfärbung zahlreiche Modifikationen denkbar. Beispielsweise kann die Herstellung einer mehrschichtigen Silierfolie anstelle durch Koextrusion auch durch Verkleben oder durch einfaches Aufeinanderlegen einzelner Schichten erfolgen oder die Silierfolie kann einschichtig ausgebildet sein und nur die Funktionsschicht mit den eingebetteten Metallpartikeln umfassen. Die Metallpartikel können neben Aluminium auch aus Magnesium oder Zink oder auch aus anderen stark reflektierenden und wärmeleitenden Metallpartikeln oder deren Legierungen oder Gemischen bestehen.

Gemessen wurde die Reflexion der Wärmestrahlung der Silierfolie mit einem UV-VIS-Spektrometer (bis 2500nm) bzw. mit einem IR-Spektrometer (bis 15000nm) in Reflexion mittels Ulbrichtscher Kugel. Die in dieser Schrift angegebenen Werte für die Reflexion der Wärmestrahlung sind die Mittelwerte über den Wellenlängenbereich von 2200 bis 15000nm.

## Patentansprüche

1. Silierfolie zum Abdecken von in Fahrsilos oder zum Umhüllen von als Ballen verdichteten landwirtschaftlichen Produkten bei der Silierung, **dadurch gekennzeichnet, dass** in das Folienmaterial den eine Erwärmung der Silage bewirkenden Spektrenbereich des Sonnenlichts reflektierende metallische Partikel eingebunden sind, die zudem einen zur Wärmeabführung aus der Silage dienenden hohen Wärmeleitwert der Silierfolie bewirken.

2. Silierfolie nach Anspruch 1, **dadurch gekennzeichnet, dass** die Silierfolie mindestens 20% des Sonnenlichtes im IR-Wellenlängenbereich zwischen 2200 und 15000nm reflektiert.

3. Silierfolie nach Anspruch 1 und 2, **dadurch gekennzeichnet, dass** die Metallpartikel aus Aluminium, Magnesium, Zink und/oder ähnlichen Metallen oder deren Metalllegierungen bestehen.

4. Silierfolie nach einem der Ansprüche 1 bis 3, **gekennzeichnet durch** eine zwei- oder mehrschichtige, **durch** Koextrusion oder Verkleben oder **durch** einfaches Aufeinanderlegen von Einzelfolien erzeugte Ausbildung, wobei die mindestens eine - zur Silage weisende - Innenschicht als Trägerschicht und die Außenschicht mit in diese eingebetteten Metallpartikeln als Funktionsschicht zur Reflexion der IR-Strahlung und zur Wärmeabführung aus der Silage fungiert.

5. Silierfolie nach Anspruch 1 - 4, **dadurch gekennzeichnet, dass** die Trägerschicht(en) schwarz oder weiß eingefärbt ist (sind).

6. Silierfolie nach Anspruch 1 - 5, **dadurch gekennzeichnet, dass** die innere Trägerschicht schwarz eingefärbt ist und gegebenenfalls vorhandene weitere Trägerschichten schwarz oder weiß ausgeführt sind.

7. Silierfolie nach Anspruch 1, **dadurch gekennzeichnet, dass** die Größe der Metallpartikel zwischen 1 und 50µm beträgt und deren Anteil in der einschichtigen Silierfolie oder in der Funktionsschicht einer zwei oder mehrschichtigen Silierfolie zwischen 0,1 und 2, vzw. zwischen 0,2 und 0,5% liegt.

8. Silierfolie nach Anspruch 1, **dadurch gekennzeichnet, dass** deren Gesamtdicke zwischen 10 und 500µm beträgt.

9. Silierfolie nach Anspruch 1, **dadurch gekennzeichnet, dass** das Folienmaterial Polyethylen ist.

10. Silierfolie nach Anspruch 1 - 4 und 7 - 10, **dadurch gekennzeichnet, dass** durch Farbstoffe in einer oder mehreren Schicht(en) der Silierfolie andere Farbtöne oder Farbnuancen eingestellt werden.
